# EUROPEAN PATENT APPLICATION

(11) **EP 3 125 169 A1**
(43) Date of publication of application: **01.02.2017**
(21) Application number: 16175664.8
(22) Date of filing: 22.06.2016
(51) Int. Cl.: G06Q 10/06, G06Q 10/08

(54) **COMPUTING SYSTEM WITH GEOFENCE MECHANISM AND METHOD OF OPERATION THEREOF**

(30) Priority: 29.07.2015 US 201514812626
(71) Applicant: TeleNav, Inc., Santa Clara, CA 95054 (US)
(72) Inventor: Hansen, Karl C., Concord, NH 03301 (US)
(74) Representative: Liesegang, Eva

(57) **Abstract**

A method of operation of a computing system includes: identifying a user profile for representing a user accessing a device; generating a continuous geofence with a control unit based on the user profile for continuously controlling the device within the continuous geofence; and calculating a magnitude controller based on the continuous geofence for controlling the device.

## Description

### TECHNICAL FIELD

An embodiment of the present invention relates generally to a computing system, and more particularly to a system with a geofence mechanism.

### BACKGROUND ART

Modern consumer and industrial electronics, especially devices such as graphical computing systems, televisions, projectors, cellular phones, portable digital assistants, and combination devices, are providing increasing levels of functionality to support modem life including location-based information services. Research and development in the existing technologies can take a myriad of different directions.

As users become more empowered with the growth of mobile communication technology, new and old paradigms begin to take advantage of this new space. One such space is location-based functions for devices. The possible applications for balancing accessibility with safety have yet been fully utilized.

Thus, a need still remains for a computing system with a geofence mechanism. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

### DISCLOSURE OF THE INVENTION

An embodiment of the present invention provides a method of operation of a computing system including: identifying a user profile for representing a user accessing a device; generating a continuous geofence with a control unit based on the user profile for continuously controlling the device within the continuous geofence; and calculating a magnitude controller based on the continuous geofence for controlling the device.

An embodiment of the present invention provides a computing system, including: a storage interface configured to access a user profile for representing a user accessing a device; and a control unit, coupled to the storage interface, configured to: generate a continuous geofence based on the user profile for continuously controlling the device within the continuous geofence, and calculate a magnitude controller based on the continuous geofence for controlling the device.

An embodiment of the present invention provides a non-transitory computer readable medium including instructions for a computing system, including: identifying a user profile for representing a user accessing a device; generating a continuous geofence based on the user profile for continuously controlling the device within the continuous geofence; and calculating a magnitude controller based on the continuous geofence for controlling the device.

Certain embodiments of the invention have other steps or elements in addition to or in place of those mentioned above. The steps or elements will become apparent to those skilled in the art from a reading of the following detailed description when taken with reference to the accompanying drawings.

### BRIEF DESCRIPTION OF THE DRAWINGS

FIG. 1 is a computing system with a geofence mechanism in an embodiment of the present invention.
FIG. 2 is an example of a display interface of the computing system.
FIG. 3 is a further example of the display interface of the computing system.
FIG. 4 is an exemplary block diagram of the computing system.
FIG. 5 is a control flow of the computing system.
FIG. 6 is a flow chart of a method of operation of a computing system in an embodiment of the present invention.

### BEST MODE FOR CARRYING OUT THE INVENTION

The following embodiments can be for generating and implementing a continuous geofence for gradually controlling a device associated with a user based on a target location of the user relative to the continuous geofence. The continuous geofence can be for gradually controlling a diminished feature through a magnitude controller instead of a binary geofence providing binary "on" or "off" using a threshold geofence. The continuous geofence can be based on control profile or an authorization controller. The continuous geofence can further be based on user context.

The following embodiments are described in sufficient detail to enable those skilled in the art to make and use the invention. It is to be understood that other embodiments would be evident based on the present disclosure, and that system, process, or mechanical changes may be made without departing from the scope of an embodiment of the present invention.

In the following description, numerous specific details are given to provide a thorough understanding of the invention. However, it will be apparent that the invention may be practiced without these specific details. In order to avoid obscuring an embodiment of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation. The embodiments have been numbered first embodiment, second embodiment, etc. as a matter of descriptive convenience and are not intended to have any other significance or provide limitations for an embodiment of the present invention.

One skilled in the art would appreciate that the format with which navigation information is expressed is not critical to some embodiments of the invention. For example, in some embodiments, navigation information is presented in the format of (X, Y); where X and Y are two coordinates that define the geographic location, i.e., a position of a user.

In an alternative embodiment, navigation information is presented by longitude and latitude related information. In a further embodiment of the present invention, the navigation information also includes a velocity element including a speed component and a heading component.

The term "relevant information" referred to herein can include the navigation information described as well as information relating to points of interest to the user, such as local business, hours of businesses, types of businesses, advertised specials, traffic information, maps, local events, and location based community or personal information.

The term "module" referred to herein can include or be implemented as software, hardware, or a combination thereof in the present invention in accordance with the context in which the term is used. For example, the software can be machine code, firmware, embedded code, and application software. The software can also include a function, a call to a function, a code block, or a combination thereof. Also for example, the hardware can be gates, circuitry, processor, computer, integrated circuit, integrated circuit cores, a pressure sensor, an inertial sensor, a microelectromechanical system (MEMS), passive devices, physical non-transitory memory medium having instructions for performing the software function, a portion therein, or a combination thereof.

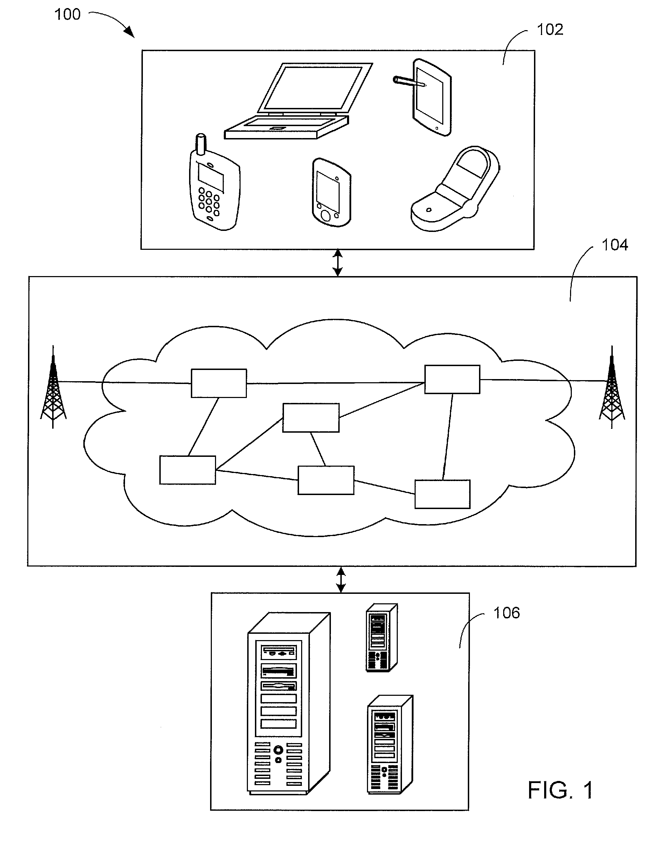

Referring now to FIG. 1, therein is shown a computing system 100 with a geofence mechanism in an embodiment of the present invention. The computing system 100 can include a first device 102, such as a client or a server, connected to a second device 106, such as a client or server. The computing system 100 can include a navigation system for searching or providing guidance or information associated with geographic locations, a regulatory system for enabling access to a device or a vehicle, or a combination thereof. The first device 102 can communicate with the second device 106 with a network 104, such as a wireless or wired network.

For example, the first device 102 can be of any of a variety of computing devices, such as a cellular phone, personal digital assistant, a notebook computer, automotive telematics navigation system, or other multi-functional mobile communication or entertainment device. Also for example, the first device 102 can include a device or a sub-system for enabling access to a device or a vehicle, including an ignition interlock device.

The first device 102 can couple, either directly or indirectly, to the network 104 to communicate with the second device 106 or can be a stand-alone device. The first device 102 can further be separate form or incorporated with a vehicle, such as a car, truck, bus, or train.

For illustrative purposes, the computing system 100 is described with the first device 102 as a mobile computing device, although it is understood that the first device 102 can be different types of devices. For example, the first device 102 can also be a non-mobile computing device, such as a server, a server farm, or a desktop computer.

The second device 106 can be any of a variety of centralized or decentralized computing devices, or video transmission devices. For example, the second device 106 can be a computer, grid computing resources, a virtualized computer resource, cloud computing resource, routers, switches, peer-to-peer distributed computing devices, or a combination thereof.

The second device 106 can be centralized in a single room, distributed across different rooms, distributed across different geographical locations, embedded within a telecommunications network, or a combination thereof. The second device 106 can couple with the network 104 to communicate with the first device 102. The second device 106 can also be a client type device as described for the first device 102.

For illustrative purposes, the computing system 100 is described with the second device 106 as a non-mobile computing device, although it is understood that the second device 106 can be different types of computing devices. For example, the second device 106 can also be a mobile computing device, such as notebook computer, another client device, or a different type of client device. The second device 106 can be a standalone device, or can be incorporated with a vehicle, such as a car, a truck, a bus, or a train.

Also for illustrative purposes, the computing system 100 is described with the second device 106 as a computing device, although it is understood that the second device 106 can be different types of devices. Also for illustrative purposes, the computing system 100 is shown with the second device 106 and the first device 102 as end points of the network 104, although it is understood that the computing system 100 can have a different partition between the first device 102, the second device 106, and the network 104. For example, the first device 102, the second device 106, or a combination thereof can also function as part of the network 104.

The network 104 can span and represent a variety of networks. For example, the network 104 can include wireless communication, wired communication, optical, ultrasonic, or the combination thereof. Satellite communication, cellular communication, Bluetooth, Infrared Data Association standard (lrDA), wireless fidelity (WiFi), and worldwide interoperability for microwave access (WiMAX) are examples of wireless communication that can be included in the communication path 104. Ethernet, digital subscriber line (DSL), fiber to the home (FTTH), and plain old telephone service (POTS) are examples of wired communication that can be included in the network 104. Further, the network 104 can traverse a number of network topologies and distances. For example, the network 104 can include direct connection, personal area network (PAN), local area network (LAN), metropolitan area network (MAN), wide area network (WAN), or a combination thereof.

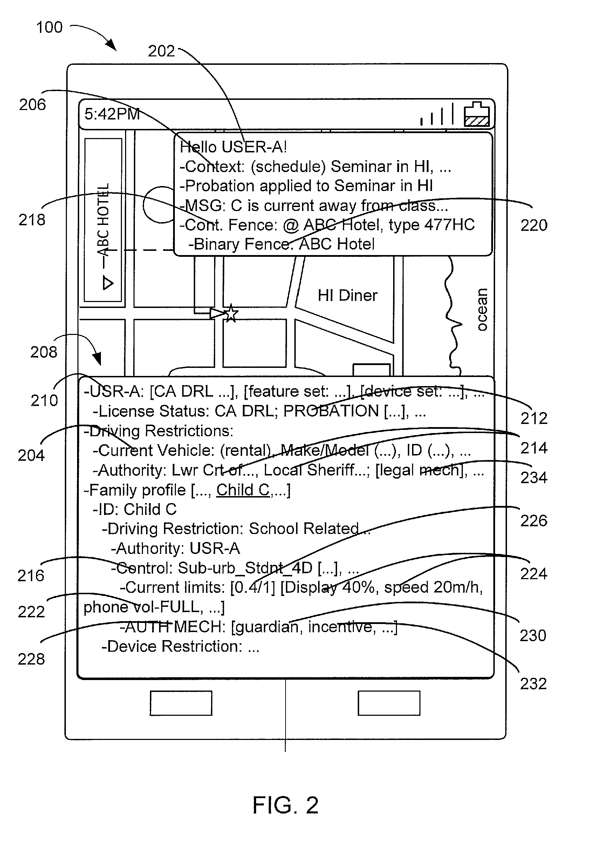

Referring now to FIG. 2, therein is shown an example of a display interface of the computing system 100. The computing system 100 can show a representation of a user 202. The user 202 can include a person or an entity associated with the computing system 100 or a device therein, such as the first device 102 of FIG. 1, the second device 106 of FIG. 1, or a combination thereof. The user 202 can own, operate, access, possess, or a combination thereof for the device of the computing system 100. The user 202 can further interface with the device or have the device on the person of the user 202.

The user 202 can further be associated with physical movement or geographical displacements. The user 202 can be traveling from one location to another location. The user 202 can be maneuvering or occupying a vehicle 204 in traveling from one location to another. The vehicle 204 can further be associated with or included in the computing system 100. For example, the vehicle 204 can be the first device 102, interface with the first device 102, include the first device 102 therein, connected to or coupled with the first device 102, or a combination thereof.

The computing system 100 can determine user context 206. The user context 206 can include data or information associated with or relevant to the user 202. The user context 206 can include determinable aspect of a current circumstance or situation for the user 202.

For example, the user context 206 can include content, value, metadata, preference, setting, configuration, a portion thereof, a representation thereof, or a combination thereof. Also for example, the user context 206 can include data or information associated with movement or travel of the user 202, schedule or calendar of the user 202, communications of the user 202, current time, groups or relationships of the user 202, current environment, or a combination thereof.

The user context 206 can include data or information representing an aspect of a current circumstance or situation of the user 202 associated with the travels of the user 202. For example, the user context 206 can include an origination location, a destination, an expression thereof, an estimation thereof, a heading, a previously traveled route, a currently traversed route, number of passengers in the vehicle 204 with the user 202, identity of the passenger, or a combination thereof.

The user context 206 can further include a label or a value representing a purpose, a goal, a meaning, a significance, a category, an affinity, or a combination thereof associated with the user 202. For example, the user context 206 can include a value or a selection representing commute to or from work, leisure activity, group travel, importance or value to the user 202, regularity or irregularity of the activity, importance or value to a party other than the user 202, or a combination thereof.

The computing system 100 can process a user profile 208 for representing the user 202. The user profile 208 is a description or a representation of the user 202. The user profile 208 can include user identification 210 as information utilized for identifying the user 202. For example, the user identification 210 can include a name, a government-issued identification information, an account name or identification, a contact information, physical features or traits, audible features or traits, or a combination thereof.

The user profile 208 can include a license status 212 of the user 202. The license status 212 can include a description or a representation of a requirement or a qualification of the user 202 for operating the vehicle 204. For example, the license status 212 can include driver's license, learner's permit, or a combination thereof. Also for example, the license status 212 can include a status for the vehicle license, such as registration status, insurance coverage status, suspensions or penalties associated with the license, authorization or a permission for the user 202 to operate the vehicle 204, or a combination thereof.

The user profile 208 can further include an authorization controller 214. The authorization controller 214 is information identifying or representing a person, a party, an entity, or a combination thereof enabling or allowing access to the vehicle 204. The authorization controller 214 can be associated with the vehicle 204, the user 202, or a combination thereof.

For example, the authorization controller 214 can include an owner of the vehicle 204, such as a rental car company or a renter providing the vehicle 204. Also for example, the authorization controller 214 can include a parent of the user 202. Also for example, the authorization controller 214 can include the user 202 providing permission to access the vehicle 204, such as for servicing or valet.

Also for example, the authorization controller 214 can include a government or a licensing agency, such as Department of Motor Vehicles, Department of Transportation, Department of Licensing, law enforcement, courts, or a combination thereof. Also for example, the authorization controller 214 can include a service provider, such as a vehicle insurance provider, a security or theft protection service, or a combination thereof.

The user profile 208 can further include a control profile 216. The control profile 216 is details controlling or limiting use or access of the computing system 100 for the user 202. The control profile 216 can control or limit use or access to the first device 102, the second device 106, or a combination thereof by the user 202. The control profile 216 can control or limit use or access based on geographic location of the user 202, such as associated with the vehicle 204, the first device 102, the second device 106, or a combination thereof.

The control profile 216 can be from, provided by, or designated by the authorization controller 214. The control profile 216 can include conditions for utilizing, controlling, accessing, restrictions thereto, or a combination thereof for the computing system 100 for the user 202. The control profile 216 can include specifics regarding the utilization, control, access, restrictions, implementation thereof, or a combination thereof.

For example, the control profile 216 can include a location or a region, a condition or a context, a situation or information associated thereto, or a combination thereof for allowing full access or features for the user 202. Also for example, the control profile 216 can include a further location or a further region for restricting access or features available or utilization for the user 202. The control profile 216 can include a degree of restriction, implementation or details for the restrictions, or a combination thereof.

As a more specific example, the control profile 216 can include a label, a value, a type, a category, or a combination thereof for representing the location or the region, the condition or the context, the situation or information associated thereto, or a combination thereof. Also as a more specific example, the control profile 216 can include a tolerance level, a decay or diminishment rate, a threshold or a range, or a combination thereof for implement utilization, control, access, restriction thereto, or a combination thereof.

The computing system 100 can generate and utilize a continuous geofence 218. The continuous geofence 218 can be different from a binary geofence 220, which can be a virtual barrier representing a location or an enclosed area associated with binary status, action, implementation, or a combination thereof. The continuous geofence 218 is a representation of a degree or an intensity associated with a geographic reference location or area. The continuous geofence 218 can be associated with a magnitude or a degree for a feature or an access for the user 202 for the computing system 100 instead of a binary control or access.

For example, the continuous geofence 218 can implement a full-feature 222 along with a diminished feature 224. The full-feature 222 can include uninhibited control or access granted to the user 202 for the computing system 100, a device therein, the vehicle 204, or a combination thereof. The diminished feature 224 is an access or a feature available to the user 202 with a restriction or a limit to the user 202 according to the continuous geofence 218.

The binary geofence 220 can be for performing binary functions, such as sending a communication notice, enabling or disabling a feature, or a combination thereof, based on the user 202 or a device associated with the user 202 crossing the binary geofence 220. The binary geofence 220 can be used to implement or complete the full-feature 222, without the diminished feature 224, based on the user 202 being within or outside of the binary geofence 220.

The continuous geofence 218 can be for implementing and varying the diminished feature 224 based on a distance from the reference location or area. The continuous geofence 218 can continuously vary the degree or the magnitude for the diminished feature 224 based on the distance between the user 202 and the reference location or area. The continuous geofence 218 can further avail the full-feature 222 without any limitation on degree or magnitude within the reference area and continuously control the degree or the magnitude for the diminished feature 224 outside of the reference area.

The computing system 100 can calculate a magnitude controller 226 based on the continuous geofence 218. The magnitude controller 226 is an implementation of limiting or controlling the access or the utilization. The magnitude controller 226 can represent the control or the limitation for the magnitude or the degree for the diminished feature 224.

For example, the magnitude controller 226 can include a factor applicable to a setting or a control, a maximum or a minimum value available, or a combination thereof. As a more specific example, the magnitude controller 226 can include a factor or a scalar for controlling the degree or the magnitude associated with the diminished feature 224.

The computing system 100 can calculate the magnitude controller 226 based on a continuous function or equation associated with the continuous geofence 218. The magnitude controller 226 can be an output from the continuous function or equation. The magnitude controller 226 can be based on the distance between the user 202 and the reference location or area for the continuous geofence 218.

The computing system 100 can calculate the magnitude controller 226 for various uses. For example, the computing system 100 can calculate the magnitude controller 226 according to an authorization mechanism 228, a guardian control mechanism 230, an incentive mechanism 232, a legal-restriction mechanism 234, or a combination thereof.

The authorization mechanism 228 is a method or a process for controlling the degree or the magnitude for the authorization controller 214 associated with the user 202. The authorization mechanism 228 can be for external authorization scenario, user permitted scenario, or a combination thereof.

The user permitted scenario can include the user 202 as the authorization controller 214 to a different person, entity, or a combination thereof utilizing or accessing the vehicle 204 or the first device 102. For example, the user permitted scenario can include a person different from the user 202 accessing or utilizing the vehicle 204 or the first device 102 owned or controlled by the user 202.

As a more specific example, the user permitted scenario can be for representing the user 202 renting or lending the vehicle 204 or the first device 102 to a friend. Also as a more specific example, the user permitted scenario can be for representing the user 202 utilizing a valet service or a repair service for servicing the vehicle 204, the first device 102, or a combination thereof.

The external authorization scenario can include the authorization controller 214 in authoritative relationship to the user 202. For example, the external authorization scenario can include the authorization controller 214 corresponding to owner of the vehicle 204 or the first device 102 associated with or accessed by the user 202. As a more specific example, the external authorization scenario can be for representing the user 202 renting or borrowing the vehicle 204 or the first device 102 from the authorization controller 214 including a friend or a rental agency.

The external authorization scenario can further include a guardian control mechanism 230, a legal-restriction mechanism 234, or a combination thereof. The guardian control mechanism 230 is a method or a process for controlling the degree or the magnitude for the authorization controller 214 in guardianship relationship to the user 202. The guardian control mechanism 230 can be for the authorization controller 214 including a parent, a school, a day care, a relative, a legally recognized guardian, or a combination thereof having responsibility for the user 202.

The legal-restriction mechanism 234 is a method or a process for controlling the degree or the magnitude for the authorization controller 214 with legal regulatory authority over the user 202. The legal-restriction mechanism 234 can be for the authorization controller 214 including a government agency, an employer in the context of employment for the user 202, a law enforcement agency, or a combination thereof having authority over the user 202.

The incentive mechanism 232 is a method or a process for controlling the degree or the magnitude for the authorization controller 214 providing a benefit to the user 202. The incentive mechanism 232 can be for the authorization controller 214 providing the benefit separate from the diminished feature 224. The incentive mechanism 232 can be for the authorization controller 214 providing the benefit associated with the vehicle 204, the first device 102, the second device 106, or a combination thereof. For example, the incentive mechanism 232 can be for the authorization controller 214 including an insurance provider, a pay-to-use provider, or a combination thereof.

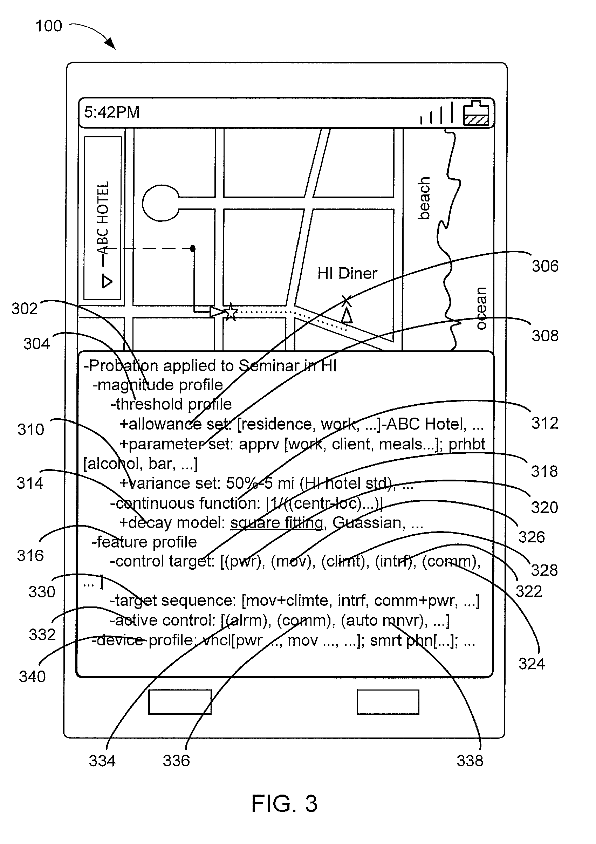

Referring now to FIG. 3, therein is shown a further example of the display interface of the computing system 100. The computing system 100 can show details regarding the continuous geofence 218 of FIG. 2. The continuous geofence 218 can include a magnitude profile 302. The magnitude profile 302 can include a set of information for calculating the magnitude controller 226 of FIG. 2. The magnitude profile 302 can include a description of parameters used to calculate the magnitude controller 226.

The magnitude profile 302 can include a threshold profile 304. The threshold profile 304 can include a description of a relationship between geographic areas or locations and the magnitude controller 226 for the continuous geofence 218. The threshold profile 304 can describe the reference location or area, rate of adjustment for magnitudes or degree according to location of the user 202 of FIG. 2, the diminished feature 224 of FIG. 2 applicable for control, or a combination thereof for the continuous geofence 218. For example, the threshold profile 304 can include an allowance set 306, a parameter set 308, a variance set 310, or a combination thereof.

The allowance set 306 is a description of a geographic location or area used as a reference location or area for the continuous geofence. The allowance set 306 can include a coordinate, a boundary, a point of interest (POI), a path, a name or a label for identifying a specific area or location, or a combination thereof.

For example, the allowance set 306 can represent a location or an area for providing the full-feature 222 of FIG. 2 when the user 202 is within the allowance set 306. Also as an example, the allowance set 306 can further represent a boundary or an area for providing the diminished feature 224 instead of the full-feature 222 when the user 202 is outside of the allowance set 306.

The parameter set 308 is a description of controls or influences for the continuous geofence 218 based on a context, a situation, or a combination thereof of the user 202. The parameter set 308 can include information or data indicating or representative of the context, the situation, or a combination thereof of the user 202, a device, the authorization controller 214 of FIG. 2, or a combination thereof relevant to calculating the magnitude controller 226. The parameter set 308 can include a contextual parameter, a situational indicator, a threshold, a template, a range, a pattern, or a combination thereof for controlling the diminished feature 224.

The variance set 310 is a description of a relationship between the magnitude controller 226 and various locations in the continuous geofence 218. The variance set 310 can describe or represent a rate of change or behavior for the magnitude controller 226 based on location of the user 202 relative to the allowance set 306.

The variance set 310 can include a buffer area, a distance, a threshold, a model point, or a combination thereof. For example, the variance set 310 can include a curve shape or type, a significant location or value for the magnitude controller 226, or a combination there-of. As a more specific example, the variance set 310 can include one or more coordinates of location and corresponding value for the magnitude controller 226, a significant cutoff or roll-off location, a shape of curve or distribution type, or a combination thereof for describing the magnitude controller 226 based on the location of the user 202 relative to the allowance set 306.

The computing system 100 can process the threshold profile 304 in a variety of ways. For example, the computing system 100 can receive the threshold profile 304 from the authorization controller 214 of FIG. 2 through the control profile 216 of FIG. 2, generate the threshold profile 304 based on the control profile 216 from the authorization controller 214, generate the threshold profile 304 based on the authorization controller 214, or a combination thereof. Details regarding processing of the threshold profile 304 are discussed below.

The magnitude profile 302 can further include a continuous function 312. The continuous function 312 is a description of a relationship between the magnitude controller 226 and potential locations of the user 202. The continuous function 312 can include a method, a process, an equation, or a combination thereof generated by the computing system 100 with the location of the user 202 as an input and the magnitude controller 226 as an output.

The continuous function 312 can be based on the allowance set 306, the parameter set 308, the variance set 310, the control profile 216, or a combination thereof. The continuous function 312 can be generated to provide the full-feature 222 within the allowance set 306. The continuous function 312 can be generated to calculate the magnitude controller 226 for implementing the diminished feature 224 based on a distance between the user 202 and the allowance set 306. The continuous function 312 can be generated to calculate the magnitude controller 226 according to the variance set 310, the parameter set 308, or a combination thereof.

The continuous function 312 can be represented in three dimensions with the magnitude controller 226 over or corresponding to a two dimensional plane. The continuous function 312 can further be represented in two dimensions with the magnitude controller 226 over or corresponding to a distance between the allowance set 306, a center or a location therein, an edge thereof, or a combination thereof. The two dimensional representation can include a cross-section of the three dimensional representation.

The continuous function 312 can be based on a decay model 314. The decay model 314 is a description of a rate of change for the magnitude controller 226. The decay model 314 can be based on the parameter set 308, the variance set 310, or a combination thereof. The decay model 314 can include a slope, a shape or a type, a category, or a combination thereof. For example, the decay model 314 can represent standardized or known rates or behavior for the rate of change for the magnitude controller 226.

As a more specific example, the decay model 314 can include a linear decay setting or a rate thereof, such as a decrease or increase in set amplitude per each feet or mile. Also as a more specific example, the decay model 314 can include a bell-curve, logarithmic function, geometric growth or decay, or other similar shapes or types categorizing a shape or outline of the two dimensional representation or the cross-section of the three dimensional representation of the continuous function 312.

Also as a more specific example, the decay model 314 can include a type or a categorization for curve fitting functions or methods. The decay model 314 can include a designation for various fitting models or methods, such as geometric fitting model, linear fitting model, damped least-squares method, or total least squares method. The decay model 314 can also include a designation for filtering methods, such as for digital signal filters, including a Butterworth filter or Chebyshev filter. The decay model 314 can further include one or more control parameters for the designation or type, such as roll-off location, width, tolerance, magnitude or offset parameters, or a combination thereof.

The continuous geofence 218 can further include a feature profile 316. The feature profile 316 can include details for implementing or applying the magnitude controller 226 to a device or a feature thereof.

The feature profile 316 can include a control target 318 for identifying the device, the feature, a circuit, an application, a portion or an attribute thereof, or a combination thereof for applying or implementing the magnitude controller 226. The computing system 100 can apply or implement the magnitude controller 226 to the control target 318 to implement the diminished feature 224 and the continuous geofence 218.

For example, the control target 318 can include a device, a function, an application, an instruction, or a combination thereof within the first device 102, the second device 106, the vehicle 204 of FIG. 2, or a combination thereof. As a more specific example, the control target 318 can include a power-state controller 320, an interface controller 322, a communication controller 324, a movement controller 326, a climate controller 328, or a combination thereof.

The power-state controller 320 can include a device, a function, an application, an instruction, or a combination thereof for controlling an overall power or on/off status of a device, a system, a feature, an application, or a combination thereof. For example, the power-state controller 320 can include an ignition system for the vehicle 204, a power supply or power status controller for a sub-system in the vehicle, such as lights or horns, a power supply or power status controller for the first device 102, a power-down or an exit function for an application, an external shut-off application or function, or a combination thereof.

The interface controller 322 can include a device, a sub-system, a function, an application, an instruction, a protocol, or a combination thereof for controlling interface between the user 202 and the device, such as the first device 102, the second device 106, the vehicle 204, or a combination thereof. For example, the interface controller 322 can include a display screen, a microphone, a speaker, a graphic or a sound generator, a haptic output controller, an input mechanism, or a combination thereof.

As a more specific example, the interface controller 322 can include a circuit, an instruction, a function, an application, or a combination thereof for controlling a brightness, a color, a displayed image, a volume, a tone, or a combination thereof. Also as a more specific example, the interface controller 322 can include an entertainment system in the vehicle 204. Also as a more specific example, the interface controller 322 can include a keyboard, a mouse, a touch screen reader, a microphone, a text-to-speech or a speech-to-text function, or a combination thereof.

The communication controller 324 can include a device, a sub-system, a function, an application, an instruction, a protocol, or a combination thereof for controlling communication between devices. The communication controller 324 can include application or functions for telephone communication, text messaging, email messaging, internet access, or a combination thereof.

The movement controller 326 can include a device, a sub-system, a function, an application, an instruction, a protocol, or a combination thereof for controlling maneuvering of the vehicle 204. For example, the movement controller 326 can include an accelerator sub-system, a breaking sub-system, steering sub-system, transmission, or a combination thereof.

The climate controller 328 can include a device, a sub-system, a function, an application, an instruction, a protocol, or a combination thereof for controlling internal environment of a structure, such as the vehicle 204 or a building. For example, the climate controller 328 can include air-conditioning system, heater, lights, actuators for windows or other openings, or a combination thereof.

The feature profile 316 can further include a target sequence 330, an active control 332, or a combination thereof. The target sequence 330 can include an arrangement of instructions or operations. The target sequence 330 can include a specific order of operation for implementing the authorization controller 214. The target sequence 330 can include a series of function calls, a sequence of circuit controls, a sequence of control parameters, a timing for various control signals, or a combination thereof.

The active control 332 is a method or a process for performing functions autonomously without initiation from the user 202. The active control 332 can include actions or functions of the first device 102, the second device 106, the vehicle 204, or a combination thereof performed without initiation or control of the user 202. The active control 332 can include actions or functions initiated and controlled by the computing system 100 based on the location of the user 202, the first device 102, the vehicle 204, or a combination thereof relative to the continuous geofence 218.

The active control 332 can be actively providing a function or an action instead of controlling a magnitude or a degree through the diminished feature 224. For example, the active control 332 can include an alarm mechanism 334, a communication mechanism 336, an automated maneuver mechanism 338, or a combination thereof.

The alarm mechanism 334 is a method or a process for alerting the surrounding environment of the device. The alarm mechanism 334 can include instructions or steps for operating or controlling the power-state controller 320, the interface controller 322, the climate controller 328, or a combination thereof.

For example, the alarm mechanism 334 can alert the user 202 or people around the user 202 using the entertainment system or the user interface of the first device 102 or the vehicle 204. Also for example, the alarm mechanism 334 can alert the people around the vehicle 204 using the entertainment system, the horn, the lights, the windows, or a combination thereof.

The communication mechanism 336 is a method or a process for communicating a party associated with the user 202. The communication mechanism 336 can contact the user 202, the authorization controller 214, a designated party, or a combination thereof according to the authorization mechanism 228 of FIG. 2, the incentive mechanism 232 of FIG. 2, or a combination thereof.

For example, the communication mechanism 336 can initiate a communication or send designated information to the user 202 regarding behavior actions of a person or a party borrowing or serving the first device 102 or the vehicle 204 belonging to the user 202. Also for example, the communication mechanism 336 can initiate a communication or send designated information to the authorization controller 214, such as a law enforcement agency or the parent, an interested or designated party, such as the insurance agency, or a combination thereof.

The automated maneuver mechanism 338 is a method or a process for autonomously maneuvering the vehicle 204. The automated maneuver mechanism 338 can maneuver the vehicle 204, such as pulling over or traveling to a specific location, without the control of the user 202 or occupants of the vehicle 204. The automated maneuver mechanism 338 can autonomously maneuver the vehicle 204 instead of controlling features available to the user 202 or the occupants of the vehicle 204, such as a limit on the speed or acceleration, for the diminished feature 224.

The computing system 100 can further utilize a device profile 340. The device profile 340 can include a description of components, sub-systems, features, functions, applications, a portion therein, or a combination thereof included in a device. The device profile 340 can describe the first device 102, the second device 106, the vehicle 204, or a combination thereof.

The device profile 340 can further describe or identify the components, the sub-systems, the features, the functions, the applications, a portion therein, or a combination thereof applicable to or associated with the continuous geofence 218, the diminished feature 224, the active control 332, or a combination thereof. The device profile 340 can describe or identify the components, the sub-systems, the features, the functions, the applications, a portion therein, or a combination thereof subject to be the control target 318 for implementing the continuous geofence 218, the diminished feature 224, the active control 332, or a combination thereof.

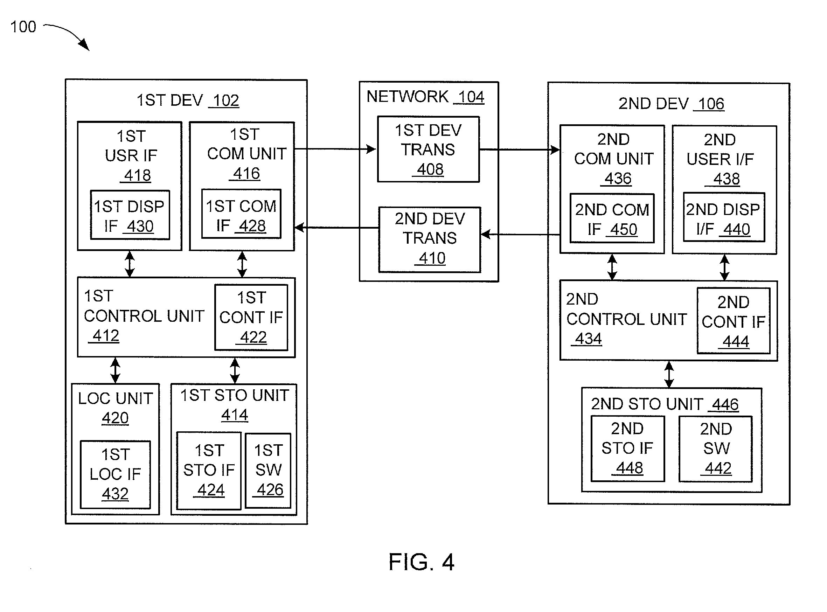

Referring now to FIG. 4, therein is shown an exemplary block diagram of the computing system 100. The computing system 100 can include the first device 102, the network 104, and the second device 106. The first device 102 can send information in a first device transmission 408 over the network 104 to the second device 106. The second device 106 can send information in a second device transmission 410 over the network 104 to the first device 102.

For illustrative purposes, the computing system 100 is shown with the first device 102 as a client device, although it is understood that the computing system 100 can have the first device 102 as a different type of device. For example, the first device 102 can be a server having a display interface.

Also for illustrative purposes, the computing system 100 is shown with the second device 106 as a server, although it is understood that the computing system 100 can have the second device 106 as a different type of device. For example, the second device 106 can be a client device.

For brevity of description in this embodiment of the present invention, the first device 102 will be described as a client device and the second device 106 will be described as a server device. The embodiment of the present invention is not limited to this selection for the type of devices. The selection is an example of an embodiment of the present invention.

The first device 102 can include a first control unit 412, a first storage unit 414, a first communication unit 416, and a first user interface 418, and a location unit 420. The first control unit 412 can include a first control interface 422. The first control unit 412 can execute a first software 426 to provide the intelligence of the computing system 100.

The first control unit 412 can be implemented in a number of different manners. For example, the first control unit 412 can be a processor, an application specific integrated circuit (ASIC) an embedded processor, a microprocessor, a hardware control logic, a hardware finite state machine (FSM), a digital signal processor (DSP), or a combination thereof. The first control interface 422 can be used for communication between the first control unit 412 and other functional units in the first device 102. The first control interface 422 can also be used for communication that is external to the first device 102.

The first control interface 422 can receive information from the other functional units or from external sources, or can transmit information to the other functional units or to external destinations. The external sources and the external destinations refer to sources and destinations external to the first device 102.

The first control interface 422 can be implemented in different ways and can include different implementations depending on which functional units or external units are being interfaced with the first control interface 422. For example, the first control interface 422 can be implemented with a pressure sensor, an inertial sensor, a microelectromechanical system (MEMS), optical circuitry, waveguides, wireless circuitry, wireline circuitry, or a combination thereof.

The first storage unit 414 can store the first software 426. The first storage unit 414 can also store the relevant information, such as data representing incoming images, data representing previously presented image, sound files, or a combination thereof.

The first storage unit 414 can be a volatile memory, a nonvolatile memory, an internal memory, an external memory, or a combination thereof. For example, the first storage unit 414 can be a nonvolatile storage such as non-volatile random access memory (NVRAM), Flash memory, disk storage, or a volatile storage such as static random access memory (SRAM).

The first storage unit 414 can include a first storage interface 424. The first storage interface 424 can be used for communication between the first storage unit 414 and other functional units in the first device 102. The first storage interface 424 can also be used for communication that is external to the first device 102.

The first storage interface 424 can receive information from the other functional units or from external sources, or can transmit information to the other functional units or to external destinations. The external sources and the external destinations refer to sources and destinations external to the first device 102.

The first storage interface 424 can include different implementations depending on which functional units or external units are being interfaced with the first storage unit 414. The first storage interface 424 can be implemented with technologies and techniques similar to the implementation of the first control interface 422.

The first communication unit 416 can enable external communication to and from the first device 102. For example, the first communication unit 416 can permit the first device 102 to communicate with the second device 106 of FIG. 1, an attachment, such as a peripheral device or a desktop computer, and the network 104.

The first communication unit 416 can also function as a communication hub allowing the first device 102 to function as part of the network 104 and not limited to be an end point or terminal unit to the network 104. The first communication unit 416 can include active and passive components, such as microelectronics or an antenna, for interaction with the network 104.

The first communication unit 416 can include a first communication interface 428. The first communication interface 428 can be used for communication between the first communication unit 416 and other functional units in the first device 102. The first communication interface 428 can receive information from the other functional units or can transmit information to the other functional units.

The first communication interface 428 can include different implementations depending on which functional units are being interfaced with the first communication unit 416. The first communication interface 428 can be implemented with technologies and techniques similar to the implementation of the first control interface 422.

The first user interface 418 allows a user (not shown) to interface and interact with the first device 102. The first user interface 418 can include an input device and an output device. Examples of the input device of the first user interface 418 can include a keypad, a touchpad, soft-keys, a keyboard, a microphone, an infrared sensor for receiving remote signals, or any combination thereof to provide data and communication inputs.

The first user interface 418 can include a first display interface 430. The first display interface 430 can include an output device. The first display interface 430 can include a display, a projector, a video screen, a speaker, or any combination thereof.

The first control unit 412 can operate the first user interface 418 to display information generated by the computing system 100. The first control unit 412 can also execute the first software 426 for the other functions of the computing system 100, including receiving location information from the location unit 420. The first control unit 412 can further execute the first software 426 for interaction with the network 104 via the first communication unit 416.

The location unit 420 can generate location information, current heading, current acceleration, and current speed of the first device 102, as examples. The location unit 420 can be implemented in many ways. For example, the frst location unit 420 can function as at least a part of the global positioning system, an inertial navigation system, a cellular-tower location system, a pressure location system, or any combination thereof. Also, for example, the location unit 420 can utilize components such as an accelerometer or global positioning system (GPS) receiver.

The location unit 420 can include a first location interface 432. The first location interface 432 can be used for communication between the location unit 420 and other functional units in the first device 102. The first location interface 432 can also be used for communication external to the first device 102.

The first location interface 432 can receive information from the other functional units or from external sources, or can transmit information to the other functional units or to external destinations. The external sources and the external destinations refer to sources and destinations external to the first device 102.

The first location interface 432 can include different implementations depending on which functional units or external units are being interfaced with the location unit 420. The first location interface 432 can be implemented with technologies and techniques similar to the implementation of the first control unit 412.

The second device 106 can be optimized for implementing an embodiment of the present invention in a multiple device embodiment with the first device 102. The second device 106 can provide the additional or higher performance processing power compared to the first device 102. The second device 106 can include a second control unit 434, a second communication unit 436, a second user interface 438, and a second storage unit 446.

The second user interface 438 allows a user (not shown) to interface and interact with the second device 106. The second user interface 438 can include an input device and an output device. Examples of the input device of the second user interface 438 can include a keypad, a touchpad, soft-keys, a keyboard, a microphone, or any combination thereof to provide data and communication inputs. Examples of the output device of the second user interface 438 can include a second display interface 440. The second display interface 440 can include a display, a projector, a video screen, a speaker, or any combination thereof.

The second control unit 434 can execute a second software 442 to provide the intelligence of the second device 106 of the computing system 100. The second software 442 can operate in conjunction with the first software 426. The second control unit 434 can provide additional performance compared to the first control unit 412.

The second control unit 434 can operate the second user interface 438 to display information. The second control unit 434 can also execute the second software 442 for the other functions of the computing system 100, including operating the second communication unit 436 to communicate with the first device 102 over the network 104.

The second control unit 434 can be implemented in a number of different manners. For example, the second control unit 434 can be a processor, an embedded processor, a microprocessor, hardware control logic, a hardware finite state machine (FSM), a digital signal processor (DSP), or a combination thereof.

The second control unit 434 can include a second control interface 444. The second control interface 444 can be used for communication between the second control unit 434 and other functional units in the second device 106. The second control interface 444 can also be used for communication that is external to the second device 106.

The second control interface 444 can receive information from the other functional units or from external sources, or can transmit information to the other functional units or to external destinations. The external sources and the external destinations refer to sources and destinations external to the second device 106.

The second control interface 444 can be implemented in different ways and can include different implementations depending on which functional units or external units are being interfaced with the second control interface 444. For example, the second control interface 444 can be implemented with a pressure sensor, an inertial sensor, a microelectromechanical system (MEMS), optical circuitry, waveguides, wireless circuitry, wireline circuitry, or a combination thereof.

A second storage unit 446 can store the second software 442. The second storage unit 446 can also store the information such as data representing incoming images, data representing previously presented image, sound files, or a combination thereof.. The second storage unit 446 can be sized to provide the additional storage capacity to supplement the first storage unit 414.

For illustrative purposes, the second storage unit 446 is shown as a single element, although it is understood that the second storage unit 446 can be a distribution of storage elements. Also for illustrative purposes, the computing system 100 is shown with the second storage unit 446 as a single hierarchy storage system, although it is understood that the computing system 100 can have the second storage unit 446 in a different configuration. For example, the second storage unit 446 can be formed with different storage technologies forming a memory hierarchal system including different levels of caching, main memory, rotating media, or off-line storage.

The second storage unit 446 can be a volatile memory, a nonvolatile memory, an internal memory, an external memory, or a combination thereof. For example, the second storage unit 446 can be a nonvolatile storage such as non-volatile random access memory (NVRAM), Flash memory, disk storage, or a volatile storage such as static random access memory (SRAM).

The second storage unit 446 can include a second storage interface 448. The second storage interface 448 can be used for communication between the second storage unit 446 and other functional units in the second device 106. The second storage interface 448 can also be used for communication that is external to the second device 106.

The second storage interface 448 can receive information from the other functional units or from external sources, or can transmit information to the other functional units or to external destinations. The external sources and the external destinations refer to sources and destinations external to the second device 106.

The second storage interface 448 can include different implementations depending on which functional units or external units are being interfaced with the second storage unit 446. The second storage interface 448 can be implemented with technologies and techniques similar to the implementation of the second control interface 444.

The second communication unit 436 can enable external communication to and from the second device 106. For example, the second communication unit 436 can permit the second device 106 to communicate with the first device 102 over the network 104.

The second communication unit 436 can also function as a communication hub allowing the second device 106 to function as part of the network 104 and not limited to be an end point or terminal unit to the network 104. The second communication unit 436 can include active and passive components, such as microelectronics or an antenna, for interaction with the network 104.

The second communication unit 436 can include a second communication interface 450. The second communication interface 450 can be used for communication between the second communication unit 436 and other functional units in the second device 106. The second communication interface 450 can receive information from the other functional units or can transmit information to the other functional units.

The second communication interface 450 can include different implementations depending on which functional units are being interfaced with the second communication unit 436. The second communication interface 450 can be implemented with technologies and techniques similar to the implementation of the second control interface 444.

The first communication unit 416 can couple with the network 104 to send information to the second device 106 in the first device transmission 408. The second device 106 can receive information in the second communication unit 436 from the first device transmission 408 of the network 104.

The second communication unit 436 can couple with the network 104 to send information to the first device 102 in the second device transmission 410. The first device 102 can receive information in the first communication unit 416 from the second device transmission 410 of the network 104. The computing system 100 can be executed by the first control unit 412, the second control unit 434, or a combination thereof. For illustrative purposes, the second device 106 is shown with the partition having the second user interface 438, the second storage unit 446, the second control unit 434, and the second communication unit 436, although it is understood that the second device 106 can have a different partition. For example, the second software 442 can be partitioned differently such that some or all of its function can be in the second control unit 434 and the second communication unit 436. Also, the second device 106 can include other functional units not shown in FIG. 4 for clarity.

The functional units in the first device 102 can work individually and independently of the other functional units. The first device 102 can work individually and independently from the second device 106 and the network 104.

The functional units in the second device 106 can work individually and independently of the other functional units. The second device 106 can work individually and independently from the first device 102 and the network 104.

The functional units described above can be implemented in hardware. For example, one or more of the functional units can be implemented using the a gate, circuitry, a processor, a computer, integrated circuit, integrated circuit cores, a pressure sensor, an inertial sensor, a microelectromechanical system (MEMS), a passive device, a physical non-transitory memory medium having instructions for performing the software function, a portion therein, or a combination thereof.

For illustrative purposes, the computing system 100 is described by operation of the first device 102 and the second device 106. It is understood that the first device 102 and the second device 106 can operate any of the modules and functions of the computing system 100.

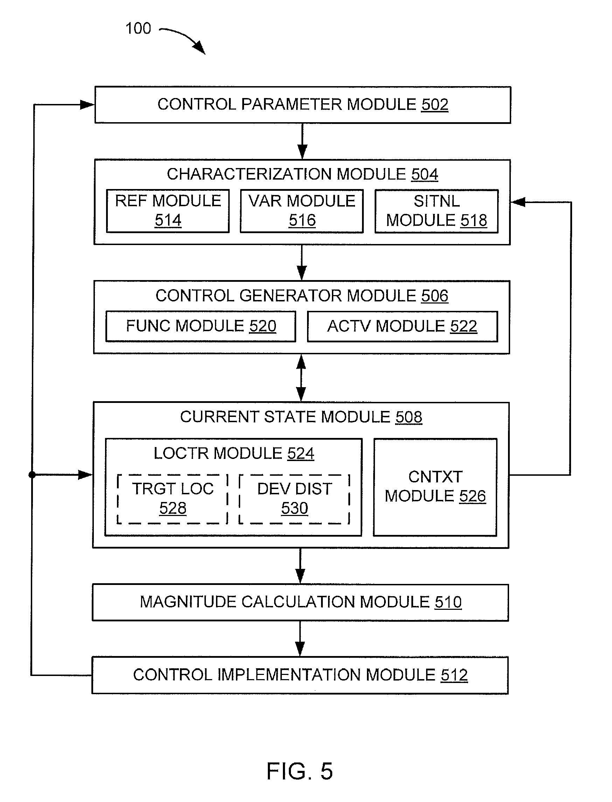

Referring now to FIG. 5, therein is shown a control flow of the computing system 100. The computing system 100 can include a control parameter module 502, a characterization module 504, a control generator module 506, a current state module 508, a magnitude calculation module 510, a control implementation module 512, or a combination thereof.

The control generator module 506 can be coupled to the characterization module 504, which can be further coupled to the control generator module 506. The control generator module 506 can be coupled to the current state module 508, which can be further coupled to the magnitude calculation module 510. The magnitude calculation module 510 can be coupled to the control implementation module 512, which can be further coupled to the control parameter module 502.

The modules can be coupled using wired or wireless connections, by having an output of one module as an input of the other module, by having operations of one module influence operation of the other module, or a combination thereof. The modules can be directly coupled with no intervening structures or objects other than the connector there-between, or indirectly coupled.

The control parameter module 502 is configured to identify the user profile 208 of FIG. 2 corresponding to the user 202 of FIG. 2. The control parameter module 502 can identify the user profile 208 for representing the user 202 accessing the first device 102 of FIG. 1, the second device 106 of FIG. 1, the vehicle 204 of FIG. 2, or a combination thereof. The control parameter module 502 can identify the user profile 208 based on identifying the user identification 210 of FIG. 2, the license status 212 of FIG. 2, the authorization controller 214 of FIG. 2, the control profile 216 of FIG. 2, or a combination thereof.

The control parameter module 502 can identify the user profile 208 in a variety of ways. For example, the control parameter module 502 can determine the user identification 210 based on identifying the user 202. The control parameter module 502 can identify or verify the user identification 210. The control parameter module 502 can interface with the user 202, visually identify the user 202, identify the user 202 using sounds, or a combination thereof.

Continuing with the example, the control parameter module 502 can use the first user interface 418 of FIG. 4, the second user interface 438 of FIG. 4, the first communication unit 416 of FIG. 4, the second communication unit 436 of FIG. 4, or a combination thereof to identify the user 202. As a more specific example, the control parameter module 502 can identify the user 202 for the user identification 210 based on recognizing the face or the voice of the user 202, based on log-in information provided by the user 202, based on self-identification of the user 202, or a combination thereof.

Also for example, the control parameter module 502 can determine the license status 212 of the user 202. The control parameter module 502 can access profile information, such as age, licensing status, qualifications for licensing, training experience, certification, or a combination thereof for determining the license status 212. As a more specific example, the control parameter module 502 can access the profile information or licensing qualification stored on the first storage unit 414 of FIG. 4, the second storage unit 446 of FIG. 4, or a combination thereof.

Also for example, the control parameter module 502 can further identify the control profile 216. The control parameter module 502 can identify the control profile 216 based on receiving the control profile 216 from the authorization controller 214. The control parameter module 502 can receive the control profile 216 using the first communication unit 416, the second communication unit 436, the first storage interface 424 of FIG. 4, the second storage interface 448 of FIG. 4, or a combination thereof.

Continuing with the example, the control parameter module 502 can further identify the control profile 216 based on identifying the authorization controller 214. The control parameter module 502 can identify the authorization controller 214 based on determining the source of the control profile 216, such as an email address, a provider authentication, content of the control profile 216, context of the control profile 216, the user identification 210, or a combination thereof.

As a more specific example, the control parameter module 502 can receive the control profile 216 through an electronic message, through a separate device or an attachment, or a combination thereof. The control parameter module 502 can use the first control unit 412 of FIG. 2, the second control unit 434 of FIG. 4, or a combination thereof to process the electronic message or interact with the separate device or the attachment, or the combination thereof. The control parameter module 502 can identify keywords in the content, source or device identification, authentication certificate, or a combination thereof to identify the control profile 216.

The control parameter module 502 can identify the control profile 216, the authorization controller 214, or a combination thereof including details or descriptions for the diminished feature 224 of FIG. 2, the active control 332 of FIG. 3, the continuous geofence 218 of FIG. 2, or a combination thereof. For example, the control profile 216 can receive the control target 318 of FIG. 3, the target sequence 330 of FIG. 3, the allowance set 306 of FIG. 3, the parameter set 308 of FIG. 3, the variance set 310 of FIG. 3, or a combination thereof from or according to the authorization controller 214.

The control parameter module 502 can identify the control profile 216, the authorization controller 214, or a combination thereof without details or descriptions for the diminished feature 224, the active control 332, the continuous geofence 218, or a combination thereof. For example, the control parameter module 502 can receive only identification of the authorization controller 214 from the authorization controller 214. Also for example, the control parameter module 502 can receive from the authorization controller 214 a label, a category, a value, a selection, or a combination thereof predetermined by the computing system 100, the authorization controller 214, or a combination thereof as the control profile 216.

The control parameter module 502 can further identify the control profile 216 including or indicating the authorization mechanism 228 of FIG. 2, such as for the external authorization scenario, the user permitted scenario, or a combination thereof. For example, the control parameter module 502 can identify the control profile 216 including the guardian control mechanism 230 of FIG. 2, the legal-restriction mechanism 234 of FIG. 2, the incentive mechanism 232 of FIG. 2, or a combination thereof.

The control parameter module 502 can identify the authorization mechanism 228 based on identity of the authorization controller 214. For example, the control parameter module 502 can identify the user permitted scenario when the authorization controller 214 is the user 202 and the party interfacing with the first device 102, the second device 106, the vehicle 204, or a combination thereof is normally unrelated to user's ownership or control thereof.

Also for example, the control parameter module 502 can identify the external authorization scenario when the authorization controller 214 is not the user 202. As a more specific example, the control parameter module 502 can identify the guardian control mechanism 230 is a parent, a guardian, or an institute or an organization having responsibilities for the user 202, such as a school or a daycare service.

Also as a more specific example, the control parameter module 502 can identify the legal-restriction mechanism 234 when the authorization controller 214 is a government entity or a law enforcement agency having authority over the user 202. Also as a more specific example, the control parameter module 502 can identify the incentive mechanism 232 when the authorization controller 214 is a service or a goods provider, such as a motor vehicle insurance or a power company, in contractual relationship with the user 202.

The computing system 100 can generate or determine the details or descriptions for the diminished feature 224, the continuous geofence 218, or a combination thereof. Details regarding processing of the details or descriptions for the diminished feature 224, the continuous geofence 218, or a combination thereof are described below.

The control parameter module 502 can further use the first control unit 412, the second control unit 434, or a combination thereof to identify the user profile 208. The control parameter module 502 can store the user profile 208 in the first storage unit 414, the second storage unit 446, or a combination thereof. The control parameter module 502 can access the user profile 208 using the first storage interface 424 of FIG. 4, the second storage interface 448 of FIG. 4, or a combination thereof.

After identifying the user profile 208, the control flow can pass from the control parameter module 502 to the characterization module 504. For example, the control flow can pass by having a processing result, such as the user profile 208 as an output from the control parameter module 502 to an input of the characterization module 504.

Also for example, the control flow can further pass by storing the processing result at a location known and accessible to the characterization module 504. Also for example, the control flow can further pass by notifying the characterization module 504, such as by using a flag, an interrupt, a status signal, or a combination thereof. Also for example, the control flow can further pass using a combination of the processes described above.

The characterization module 504 is configured to generate or determine the details or descriptions for the diminished feature 224, the continuous geofence 218, or a combination thereof. The characterization module 504 can generate the magnitude profile 302 of FIG. 3 for representing the details or descriptions for the diminished feature 224, the continuous geofence 218, or a combination thereof. The characterization module 504 can generate the magnitude profile 302 based on the control profile 216.

The characterization module 504 can generate the magnitude profile 302 including the threshold profile 304 of FIG. 3. The characterization module 504 can also generate the threshold profile 304 of the magnitude profile 302.

The characterization module 504 can generate the threshold profile 304 based on processing the allowance set 306, the variance set 310, the parameter set 308, or a combination thereof. For example, the characterization module 504 can include a reference module 514, a variation module 516, a situational module 518, or a combination thereof.

The reference module 514 is configured to identify the allowance set 306. The reference module 514 can identify the allowance set 306 for allowing the full-feature 222 of FIG. for the first device 102, the second device 106, the vehicle 204, or a combination thereof within the allowance set 306. The reference module 514 can identify the allowance set 306 for identifying the reference location or area for the continuous geofence 218. The reference module 514 can identify the allowance set 306 based on the control profile 216.

The reference module 514 can identify the allowance set 306 based on the control profile 216 including the allowance set 306. The reference module 514 can identify the allowance set 306 as designated by or applicable to the authorization controller 214.

The reference module 514 can identify the allowance set 306 including a location, a region, a route, a coordinate, a boundary, an entity, or a combination thereof for allowing the full-feature 222 as provided by the authorization controller 214 in the control profile 216. The reference module 514 can identify the allowance set 306 according to a format, an organization, an identifier, or a combination thereof predetermined by the computing system 100, the authorization controller 214, or a combination thereof.

The reference module 514 can further identify the allowance set 306 based on the authorization controller 214 or the control profile 216 not including the allowance set 306. The reference module 514 can identify the allowance set 306 based on identifying a set of locations relevant to the user 202, the authorization controller 214, the control profile 216, or a combination thereof.

For example, the reference module 514 can identify the set of locations having significance, context, relevance, importance, or a combination thereof to the user 202, the authorization controller 214, or a combination thereof. As a more specific example, the reference module 514 can identify the set of locations including a home, a place of employment, a school, a government or enforcement location, a supplier for necessities, a location associated with a necessary or approved entity or organization, or a combination thereof for the user 202, the authorization controller 214, or a combination thereof.

Also as a more specific example, the reference module 514 can identify the set of locations associated with an activity or an event scheduled for the user 202, the authorization controller 214, or a combination thereof. The reference module 514 can identify the set of locations for the activity or the event approved by the authorization controller 214 or belonging to a category approved by the authorization controller 214 through the control profile 216.

The reference module 514 can identify the allowance set 306 as or including the set of locations associated with the user 202, the authorization controller 214, or a combination thereof. The reference module 514 can further identify the allowance set 306 as or including one or more routes to, from, or between the set of locations.

For example, the reference module 514 can include a shortest route, a fastest route, a route with easiest or safest rating, or a combination thereof between locations included in the allowance set 306. Also for example, the reference module 514 can include a setting, a condition, a parameter, or a combination thereof for calculating a specific route to, from, or between the locations included in the allowance set. Also for example, the reference module 514 a specific route designated by the control profile 216 in the allowance set 306.

The reference module 514 can identify the allowance set 306 as or including the set of locations associated with the control profile 216. The reference module 514 can identify the allowance set 306 as or including locations matching or related to labels, categories, settings, values, or a combination thereof specified in the control profile 216. The reference module 514 can further identify the allowance set 306 as or including locations matching, related to, or available for the authorization controller 214.

The reference module 514 can use mappings or associations connecting various instances of the labels, the categories, the settings, the values, or a combination thereof for the control profile 216 to various instances, categories, or types of locations applicable to the user 202, the authorization controller 214, or a combination thereof. The reference module 514 can use the mappings or associations predetermined by the computing system 100, the authorization controller 214, the user 202, or a combination thereof.

The variation module 516 is configured to determine the variance set 310. The variation module 516 can determine the variance set 310 for providing the diminished feature 224 instead of the full-feature 222 for the first device 102, the second device 106, the vehicle 204, or a combination thereof outside of or away from the allowance set 306. The variation module 516 can determine the variance set 310 for calculating the magnitude controller 226 of FIG. 2. The variation module 516 can determine the variance set 310 based on the control profile 216.

The variation module 516 can determine the variance set 310 based on the control profile 216 including the variance set 310. The variation module 516 can determine the variance set 310 as designated by or applicable to the authorization controller 214.

The variation module 516 can determine the variance set 310 including description of a relationship, such as a rate of change or behavior between corresponding values of location or distance and the magnitude controller 226 for implementing the diminished feature 224 as provided by the authorization controller 214 in the control profile 216. The variation module 516 can determine the variance set 310 according to a format, an organization, an identifier, or a combination thereof predetermined by the computing system 100, the authorization controller 214, or a combination thereof.

The variation module 516 can further determine the variance set 310 based on the authorization controller 214 or the control profile 216 not including the variance set 310. The variation module 516 can determine the variance set 310 based on determining a rate of change or behavior associated with the authorization controller 214, the control profile 216, or a combination thereof.

For example, the variation module 516 can determine the variance set 310 based on determining a buffer area, a distance, a threshold, a model point, or a combination thereof associated with the allowance set 306, the control profile 216, the authorization controller 214, or a combination thereof. As a more specific example, the variation module 516 can determine the buffer area, the distance, the threshold, the model point, or a combination thereof for the locations or area in the allowance set 306 according to a type or a category of the locations or the area.

Also as a more specific example, the variation module 516 can similarly determine the buffer area, the distance, the threshold, the model point, or a combination thereof for home, work, school, supply source, or a combination thereof associated with the user 202. Also as a more specific example, the variation module 516 can similarly determine the buffer area, the distance, the threshold, the model point, or a combination thereof for a government or enforcement location, a location associated with a necessary or approved entity or organization, or a combination thereof for the authorization controller 214.

Also for example, the variation module 516 can determine the variance set 310 based on determining the buffer area, the distance, the threshold, the model point, or a combination thereof corresponding to the activity or the event scheduled for the user 202, the authorization controller 214, or a combination thereof. Also for example, the variation module 516 can determine the variance set 310 based on determining the buffer area, the distance, the threshold, the model point, or a combination thereof corresponding to a location or an area approved by the authorization controller 214 or belonging to a category approved by the authorization controller 214.

The variation module 516 can determine the buffer area, the distance, the threshold, the model point, or a combination thereof according to a method, a process, a value, or a combination thereof predetermined by the computing system 100, the authorization controller 214, the user 202, or a combination thereof. The variation module 516 can generate the variance set 310 as the buffer area, the distance, the threshold, the model point, or a combination thereof corresponding to the allowance set 306.

The situational module 518 is configured to determine the parameter set 308. The situational module 518 can determine the parameter set 308 for providing the diminished feature 224 instead of the full-feature 222 for the first device 102, the second device 106, the vehicle 204, or a combination thereof according to conditions or situations of the user 202, the device, the authorization controller 214, or a combination thereof. The situational module 518 can determine the parameter set 308 for calculating the magnitude controller 226. The situational module 518 can determine the parameter set 308 based on the control profile 216.

The situational module 518 can determine the parameter set 308 based on the control profile 216 including the parameter set 308. The situational module 518 can determine the parameter set 308 as designated by or applicable to the authorization controller 214.

The situational module 518 can determine the parameter set 308 including information or data indicating or representative of the context, the situation, or a combination thereof for implementing the diminished feature 224 as provided by the authorization controller 214 in the control profile 216. The situational module 518 can determine the parameter set 308 according to a format, an organization, an identifier, or a combination thereof predetermined by the computing system 100, the authorization controller 214, or a combination thereof.

The situational module 518 can further determine the parameter set 308 based on the authorization controller 214 or the control profile 216 not including the variance set 310. The situational module 518 can determine the parameter set 308 based on the allowance set 306, the parameter set 308, user information, or a combination thereof.

For example, the situational module 518 can determine the parameter set 308 according to demographic information of the user 202, such as enrollment as a student, identity as a minor cared by a guardian, age, profession, or a combination thereof. Also for example, the situational module 518 can determine the parameter set 308 according to the authorization controller 214, such as specific for parents, school authorities, law enforcement agency, or a combination thereof. Also for example, the situational module 518 can determine the parameter set 308 based on contextual or situational indicators predetermined by the computing system 100, the user 202, the authorization controller 214, or a combination thereof.

The characterization module 504 can generate the magnitude profile 302 including the threshold profile 304 for describing the diminished feature 224 or the magnitude controller 226 of FIG. 2 for the diminished feature 224 based on location of the first device 102, the user 202, the vehicle 204, or a combination thereof relative to the continuous geofence 218. Details regarding processing of the magnitude profile 302 including the threshold profile 304 for the diminished feature 224 or the magnitude controller 226 are described below.

The characterization module 504 can generate the magnitude profile 302, the threshold profile 304, or a combination thereof using the first user interface 418, the second user interface 438, the first communication unit 416, the second communication unit 436, the first control unit 412, the second control unit 434, or a combination thereof. The characterization module 504 can store the magnitude profile 302, the threshold profile 304, or a combination thereof in the first storage unit 414, the second storage unit 446, or a combination thereof.

After generating the magnitude profile 302, the threshold profile 304, or a combination thereof, the control flow can pass from the characterization module 504 to the control generator module 506. The control flow can pass similarly as described above between the control parameter module 502 and the characterization module 504, but using processing results of the characterization module 504, such as the magnitude profile 302, the threshold profile 304, or a combination thereof.

The control generator module 506 is configured to generate the continuous geofence 218. The control generator module 506 can generate the continuous geofence 218 based on the user profile 208 or according to the control profile 216, the authorization controller 214, or a combination thereof. The control generator module 506 can generate the continuous geofence 218 based on the threshold profile 304 processed from the user profile 208, the control profile 216, the authorization controller 214, or a combination thereof.

The control generator module 506 can generate the continuous geofence 218 for continuously controlling the first device 102, the vehicle 204, or a combination thereof within the continuous geofence 218. The control generator module 506 can generate the continuous geofence 218 including or based on the continuous function 312 of FIG. 3 for calculating the magnitude controller 226 for implementing the diminished feature 224. The control generator module 506 can further generate the continuous geofence 218 based on generating the feature profile 316 of FIG. 3 corresponding to the diminished feature 224, the continuous geofence 218, the user profile 208, or a combination thereof.

The computing system 100 can use the continuous function 312 to calculate the magnitude controller 226 corresponding to the location of the user 202 within the continuous geofence 218 in reference to the allowance set 306. The computing system 100 can use the magnitude controller 226 for controlling or diminishing access, feature, control, or a combination thereof for the first device 102, the second device 106, the vehicle 204, or a combination thereof available to the user 202 or another party.

The control generator module 506 can generate the magnitude profile 302 including the continuous function 312. The control generator module 506 can also generate the continuous function 312 for the magnitude profile 302. The control generator module 506 can further determine the active control 332. The control generator module 506 can include a function module 520, an active module 522, or a combination thereof.

The function module 520 is configured to generate the continuous function 312, the feature profile 316 associated thereto, or a combination thereof. The function module 520 can generate the continuous geofence 218 including or based on the continuous function 312 for representing the magnitude controller 226 based on locating the first device 102, the user 202, the vehicle 204, or a combination thereof relative to the continuous geofence 218.

The function module 520 can generate the continuous function 312 based on the decay model 314 of FIG. 3. The function module 520 can identify the decay model 314 based on the control profile 216, the variance set 310, the authorization controller 214, the authorization mechanism 228 derived from the authorization controller 214, or a combination thereof.

For example, the function module 520 can identify the decay model 314 identified in the control profile 216 according to a format, a sequence, an identifier, a keyword, a value, or a combination thereof predetermined for identifying the decay model 314 by the computing system 100, the authorization controller 214, the user 202, or a combination thereof. Also for example, the function module 520 can identify the decay model 314 specifically corresponding to the authorization controller 214, the user 202, the allowance set 306, the variance set 310, or a combination thereof.

Also for example, the function module 520 can identify the decay model 314 according to a size, a shape, a dimension, a rate, a ratio, or a combination thereof for the allowance set 306, the variance set 310, or a combination thereof. As a more specific example, the function module 520 can identify the decay model 314 as a function type or a category for the continuous function 312, a processing type or category, such as a specific curve fitting process or a distribution model, or a combination thereof for including or covering the size, the shape, the dimension, the rate, the ratio, or a combination thereof for the allowance set 306, the variance set 310, or a combination thereof.

The function module 520 can generate the continuous function 312 based on the decay model 314, the threshold profile 304, the user profile 208, or a combination thereof. The function module 520 can generate the continuous function 312 including the allowance set 306 as a reference location or area.

The function module 520 can generate the continuous function 312 including a different location or a different area surrounding the allowance set 306 using the function type or the category for the continuous function, the specific curve fitting process or the distribution model, or a combination thereof according to the decay model 314. The function module 520 can generate the continuous function 312 including the information in the variance set 310 according to the decay model 314.

For example, the function module 520 can generate the continuous function 312 including a curve shape or type specified by the decay model 314. Also for example, the function module 520 can generate the continuous function 312 including a significant location with corresponding value for the magnitude controller 226, a significant cutoff or roll-off location, or a combination thereof according to the variance set 310.

As a more specific example, the function module 520 can generate the continuous function 312 based on a mapping of geographic locations and desired level for the magnitude controller 226. The allowance set 306 can represent mapping of the geographic locations and desired levels for zero degradation or limitation, magnitude scalar of one, 100% availability, or a combination thereof. The function module 520 can generate the continuous function 312 as returning zero degradation or limitation, magnitude scalar of one, 100% availability, or a combination thereof for the magnitude controller 226 for the location or the region within the allowance set 306.

The variance set 310 can represent mapping of the geographic locations and desired levels for providing the degradation behavior, magnitude scalar of less than one, corresponding percentage of availability less than 100%, or a combination thereof. The function module 520 can generate the continuous function 312 based on determining a pattern or a relationship between the coordinates or a distance between a coordinate and the allowance set 306 in reference to the magnitude controller 226 for the variance set 310. The function module 520 can determine the pattern or the relationship according to the decay model 314.

The function module 520 can generate the continuous function 312 as a mathematical equation or a description best fitting the pattern or the relationship. The function module 520 can generate the continuous function 312 for calculating the magnitude controller 226 providing the degradation behavior, magnitude scalar of less than one, corresponding percentage of availability less than 100%, or a combination thereof for the location or the region outside of the allowance set 306.

The function module 520 can generate the continuous function 312 based on the parameter set 308. The function module 520 can generate the continuous function 312 as the equation or a function including contextual indicators or situational information as an input for calculating the magnitude controller 226.

The function module 520 can generate the continuous function 312 as one or more equations each corresponding to one or more contextual indicators or situational information. The function module 520 can generate the continuous function 312 based on the parameter set 308 according to a method, a process, a mechanism, or a combination thereof predetermined by the computing system 100.

For example, the function module 520 can generate the continuous function 312 to apply different decay models during school hours, during lunch time, after school, or a combination thereof for the user 202 identified as a student. Also for example, the function module 520 can generate the continuous function 312 corresponding to work commute, work-related commute or usage of the first device 102, social usage of the first device 102, or a combination thereof for the user 202 with limited access to the first device 102 or with regulated access to the vehicle 204. Also for example, the function module 520 can generate the continuous function 312 for a valet service specific to a current location of the user 202.

The function module 520 can further generate the feature profile 316 for the diminished feature 224. The function module 520 can determine the control target 318 of FIG. 3 based on the control profile 216, the authorization controller 214, the device profile 340 of FIG. 3, or a combination thereof for applying the magnitude controller 226 to control the first device 102, the second device 106, the vehicle 204, or a combination thereof.

The function module 520 can determine the control target 318 corresponding to the diminished feature 224 stated or described by the control profile 216. The function module 520 can further determine the control target 318 corresponding to the authorization controller 214, the user 202, for specific instance of the vehicle 204 or the first device 102, or a combination thereof as predetermined by the computing system 100, the authorization controller 214, the user 202, or a combination thereof.

For example, the function module 520 can determine the control target 318 including the power-state controller 320 of FIG. 3 corresponding to the diminished feature 224 associated with the control profile 216. As a more specific example, the function module 520 can determine power-state controller 320 managing overall power or energy to the first device 102, the second device 106, the vehicle 204, a sub-system or a portion therein, or a combination thereof. Also as a more specific example, the function module 520 can determine power-state controller 320 enabling or disabling access to the first device 102, the second device 106, the vehicle 204, a sub-system or a portion therein, a feature or data therein, or a combination thereof.

Also for example, the function module 520 can determine the control target 318 including the movement controller 326 of FIG. 3 corresponding to the diminished feature 224 associated with the control profile 216. The function module 520 can determine the movement controller 326 for the first device 102, the second device 106, the vehicle 204, a sub-system or a portion therein, a feature or data therein, or a combination thereof. As a more specific example, the function module 520 can determine the movement controller 326 including the speed or acceleration governor of the vehicle 204 based on indications associated with speed or acceleration in the control profile 216.

The function module 520 can similarly determine the control target 318 including the climate controller 328 of FIG. 3, the interface controller 322 of FIG. 3, the communication controller 324 of FIG. 3, or a combination thereof. The function module 520 can determine the control target 318 based on indicators, such as set predetermined values or keywords, for the control profile 216. The function module 520 can determine the control target 318 based on the identity of the authorization controller 214 or a relationship of the authorization controller 214 to the user 202 or the party interfacing with the first device 102, the second device 106, the vehicle 204, or a combination thereof.

The function module 520 can further generate the feature profile 316 including the target sequence 330 of FIG. 3 for controlling multiple instances of the control target 318. The function module 520 can generate the feature profile 316 including the target sequence 330 corresponding to the diminished feature 224 as predetermined by the computing system 100, the authorization controller 214, or a combination thereof.

The function module 520 can further generate the feature profile 316 including instructions or steps for controlling the control target 318 to apply the magnitude controller 226 to the control target 318. The function module 520 can generate the feature profile 316 including the instructions or the steps for implementing the diminished feature 224 for the control target 318 and the magnitude controller 226. The function module 520 can determine the instructions or the steps based on a set of instructions or steps predetermined by the computing system 100 of the authorization controller 214.

The active module 522 is configure to determine the active control 332. The active module 522 can determine the active control 332 according to the control profile 216 for proactively controlling the first device 102, the second device 106, the vehicle 204, or a combination thereof based on locating the user 202, the first device 102, the second device 106, the vehicle 204, or a combination thereof relative to the continuous geofence 218.

The active module 522 can determine the active control 332 including the alarm mechanism 334 of FIG. 3, the communication mechanism 336 of FIG. 3, the automated maneuver mechanism 338 of FIG. 3, or a combination thereof. The active module 522 can determine the active control 332 according to the authorization controller 214, the control profile 216, the authorization mechanism 228, or a combination thereof.

For example, the active module 522 can determine the active control 332 specified or described in the control profile 216. Also for example, the active module 522 can determine the active control 332 available or applicable for the authorization controller 214, the authorization mechanism 228, or a combination thereof as predetermined by the computing system 100.

The active module 522 can determine the control target 318 for implementing the active control 332. The active module 522 can further determine the instructions or steps for controlling the control target 318 for implementing the active control 332. The active module 522 can determine the active control 332 similar to the function module 520 determining the control target 318 and generating the feature profile 316 including instructions or steps for controlling the control target 318.

It has been discovered that the continuous geofence 218 for continuously controlling the first device 102, the second device 106, the vehicle 204, or a combination thereof provides increased usability for the user 202 and the authorization controller 214. The continuous geofence 218 continuously controlling a device, instead of the binary geofence 220 of FIG. 2 providing only enable or disable, can provide gradual implementation proportionate to the behavior or location of the user 202. The linkage between the degree or magnitude and locations can increase applications or features otherwise unavailable to the binary geofence 220.

It has further been discovered that the continuous geofence 218 based on or including the continuous function 312 provides decrease in resource requirements or usage for the computing system 100. The computing system 100 can generate and implement the continuous geofence 218 according to the continuous function 312. The continuous function 312 can be implemented using less memory than mapping locations to various magnitudes.

The control generator module 506 can process the continuous geofence 218, the continuous function 312, the active control 332, or a combination thereof using the first communication unit 416, the second communication unit 436, the first control unit 412, the second control unit 434, or a combination thereof. The control generator module 506 can store the continuous geofence 218, the continuous function 312, the active control 332, or a combination thereof in the first storage unit 414, the second storage unit 446, or a combination thereof.

After processing the continuous geofence 218, the continuous function 312, the active control 332, or a combination thereof, the control flow can pass from the control generator module 506 to the current state module 508. The control flow can pass similarly as described above between the control parameter module 502 and the characterization module 504, but using processing results of the control generator module 506, such as the continuous geofence 218, the continuous function 312, the active control 332, or a combination thereof.

The current state module 508 is configured to identify a context or a situation associated with access to the first device 102, the second device 106, the vehicle 204, or a combination thereof. The current state module 508 can identify the context or the situation surrounding the user 202. The current state module 508 can identify the context or the situation for the user 202 providing authorization or acting within authorization. For example, the current state module 508 can include a locator module 524, a context module 526, or a combination thereof.

The locator module 524 is configured to locate the user 202. The locator module 524 can locate the user 202 based on locating the first device 102, the second device 106, the vehicle 204, or a combination thereof.

The locator module 524 can locate the user 202 based on calculating a target location 528 for locating the first device 102, the second device 106, the vehicle 204, or a combination thereof. The locator module 524 can calculate the target location 528 as information representing location of the first device 102, the second device 106, the vehicle 204, or a combination thereof. The target location 528 can include GPS information, coordinates, address, geographic markers, or a combination thereof.

The target location 528 can represent a current location of the user 202, the first device 102, the second device 106, the vehicle 204, or a combination thereof. The target location 528 can further represent a calculated or targeted location or destination of the user 202, the first device 102, the second device 106, the vehicle 204, or a combination thereof.

The locator module 524 can locate the first device 102, the second device 106, the vehicle 204, or a combination thereof using the location unit 420 of FIG. 4, the first communication unit 416, the second user unit 436, location unit or communication unit in other devices, or a combination thereof. The locator module 524 can use GPS information processed by the first device 102, the second device 106, the vehicle 204 or a device therein, or a combination thereof. The locator module 524 can further track heading, velocity, acceleration, duration or timing for the movement, or a combination thereof for the first device 102, the second device 106, the vehicle 204, or a combination thereof.

The locator module 524 can calculate a deviation distance 530 based on the target location 528. The locator module 524 can calculate the deviation distance 530 as a distance between the target location 528 and the closest location on the reference portion of the continuous geofence 218. The locator module 524 can further calculate the deviation distance 530 based on the allowance set 306. The locator module 524 can calculate the deviation distance 530 based on calculating a geographic separation between two locations according to a method or process predetermined by the computing system 100.

The context module 526 is configured to identify the context or the situation for the user 202. The context module 526 can identify the context based on determining the user context 206 of FIG. 2 for describing the user 202 associated with the first device 102, the second device 106, the vehicle 204, or a combination thereof. The context module 526 can determine the user context 206 current for the user 202.

The context module 526 can determine the user context 206 based on identifying data or information from predetermined sources, sensors, devices, communications, or a combination thereof. The context module 526 can further determine the user context 206 based analyzing content, value, metadata, preference, setting, configuration, a portion thereof, a representation thereof, or a combination thereof available for the context module 526.

The context module 526 can further determine the user context 206 as a label, a category, a value, or a combination thereof representing the overall context or situation. The context module 526 can determine the label, the category, the value, or a combination thereof based on recognizing the identifying data or information indicating the overall context or situation. The context module 526 can recognize based on templates, thresholds, patterns, or a combination thereof predetermined by the computing system 100.

The current state module 508 can identify a context or a situation using the first user interface 418, the second user interface 438, the first communication unit 416, the second communication unit 436, the first storage interface 424, the second storage interface 448, or a combination thereof. The current state module 508 can process the user context 206, the target location 528, the deviation distance 530, or a combination thereof using the first control unit 412, the second control unit 434, or a combination thereof. The current state module 508 can store the user context 206, the target location 528, the deviation distance 530, or a combination thereof in the first storage unit 414, the second storage unit 446, or a combination thereof.

After identifying a context or a situation, the control flow can pass from the current state module 508 to the magnitude calculation module 510. The control flow can pass similarly as described above between the control parameter module 502 and the characterization module 504, but using processing results of the current state module 508, such as the user context 206, the target location 528, the deviation distance 530, or a combination thereof.

The magnitude calculation module 510 is configured to calculate the magnitude controller 226. The magnitude calculation module 510 can calculate the magnitude controller 226 based on the continuous geofence 218 for controlling the first device 102, the second device 106, the vehicle 204 or a portion therein, or a combination thereof. The magnitude calculation module 510 can calculate the magnitude controller 226 for implementing the diminished feature 224.

The magnitude calculation module 510 can calculate the magnitude controller 226 using the continuous function 312 representing the continuous geofence 218. The magnitude calculation module 510 can use the target location 528, the deviation distance 530, or a combination thereof as an input for the continuous function 312. The magnitude calculation module 510 can further use the user context 206 as an input for the continuous function 312 or for selecting the corresponding instance of the continuous function 312.

The magnitude calculation module 510 can set a calculated output from the continuous function 312 as the magnitude controller 226. The magnitude calculation module 510 can calculate the magnitude controller 226 for implementing the diminished feature 224 based on to locating the user 202, the first device 102, the second device 106, the vehicle 204, or a combination thereof relative to the continuous geofence 218. The magnitude calculation module 510 can calculate the magnitude controller 226 in proportion to the deviation distance 530 separating the user 202, the first device 102, the second device 106, the vehicle 204, or a combination thereof and the allowance set 306.

The magnitude calculation module 510 can calculate the magnitude controller 226 corresponding to the feature profile 316. The magnitude calculation module 510 can calculate the magnitude controller 226 corresponding to one or more of the control target 318.

It has been discovered that the magnitude controller 226 calculated based on the continuous geofence 218 and the target location 528 provides increased usability for the user 202 and the authorization controller 214. The magnitude controller 226 can be used to control the diminished feature 224 instead of the binary on/off control. The gradual implementation with varying degrees or magnitudes corresponding to the behavior or location of the user 202 can increase applications or features otherwise unavailable to the binary geofence 220.

It has also been discovered that the magnitude controller 226 based on the user context 206 and the continuous geofence 218 provides controls and exceptions relevant and appropriate for context and situations. The magnitude controller 226 based on the user context 206 can take context or situation of the user 202 or the authorization controller 214 into account. The influence from the user context 206 can adjust the magnitude controller 226 according to the situation or the context in comparison to only utilizing the location information.

The magnitude calculation module 510 can calculate the magnitude controller 226 using the first control unit 412, the second control unit 434, or a combination thereof. The magnitude calculation module 510 can store the magnitude controller 226 in the first storage unit 414, the second storage unit 446, or a combination thereof.

After calculating the magnitude controller 226, the control flow can pass from the magnitude calculation module 510 to the control implementation module 512. The control flow can pass similarly as described above between the control parameter module 502 and the characterization module 504, but using processing results of the magnitude calculation module 510, such as the magnitude controller 226.

The control implementation module 512 is configured to control the first device 102, the second device 106, the vehicle 204, the structure, or a combination thereof according to the current location, context, situation, or a combination thereof. The control implementation module 512 can implement the magnitude controller 226 to provide a diminished feature 224 for controlling the first device 102, the second device 106, the vehicle 204, or a combination thereof. The control implementation module 512 can further implement the active control 332 for controlling the first device 102, the second device 106, the vehicle 204, or a combination thereof.

The control implementation module 512 can implement the magnitude controller 226 based on the feature profile 316. The control implementation module 512 can implement by applying the magnitude controller 226 for the control target 318. The control implementation module 512 can use the instructions or the steps for implementation as included in the feature profile 316. The control implementation module 512 can implement according to the target sequence 330. The control implementation module 512 can implement the magnitude controller 226 to provide the diminished feature 224.

For example, the control implementation module 512 can implement the magnitude controller 226 to provide the diminished feature 224 according to the authorization mechanism 228, the incentive mechanism 232, or a combination thereof. As a more specific example, the control implementation module 512 can provide the diminished feature 224 according to the user permitted scenario.

Continuing with the example, the control implementation module 512 can provide the diminished feature 224, such as for controlling or limiting features or capabilities available to a party borrowing the first device 102 from the user 202 or servicing the vehicle 204 owned by the user 202. The control implementation module 512 can limit or degrade performance levels, availability, accessibility, or a combination thereof for the first device 102, the second device 106, the vehicle 204, or a combination thereof when the borrowing party or the servicing entity moves out of the allowance set 306.

As a further specific example, the control implementation module 512 can limit the speed or acceleration of the vehicle 204, sequentially disable features or information, diminish interfacing capabilities, or a combination thereof. The control implementation module 512 can degrade or diminish according to amount of deviation from the bounds set or provided by the user 202 in position of the authorization controller 214.

Also as a more specific example, the control implementation module 512 can provide the diminished feature 224 according to the external authorization scenario, such as the guardian control mechanism 230 or the legal-restriction mechanism 234. The control implementation module 512 can provide the diminished feature 224, such as for controlling or limiting features or capabilities available to the user 202.

Continuing with the example, the control implementation module 512 can limit or degrade performance levels, availability, accessibility, or a combination thereof for the first device 102, the second device 106, the vehicle 204, or a combination thereof when the user 202 moves out of the allowance set 306. The control implementation module 512 can degrade or diminish according to amount of deviation of the user 202 from the bounds set or provided by the authorization controller 214 separate from the user 202.

As a further specific example, the control implementation module 512 can sequentially remove applications or contacts, dim the display settings, reduce microphone sensitivity, or a combination thereof for the user 202 as the user 202 moves away from authorized areas. Also as a further specific example, the control implementation module 512 can implement the diminished feature 224 as dictated by a parent or a guardian for a minor or a student. Also as a further specific example, the control implementation module 512 can implement the diminished feature 224 as dictated by a government agency or a law enforcement agency, such as for enforcing penalties, conditional releases or uses, rehabilitation, monitoring, or a combination thereof.

The control implementation module 512 can implement the magnitude controller 226 based on the user context 206, the parameter set 308, or a combination thereof. The control implementation module 512 can implement the magnitude controller 226 calculated according to the user context 206 current and applicable for the user 202 from the context module 526.

For example, the control implementation module 512 can implement or withhold the magnitude controller 226 based on an emergency situation for the user 202. The computing system 100 can detect emergency scenario through the context module 526, such as by comparing health monitor or sensor readings, communication content or party, or a combination thereof to the parameter set 308.

Also for example, the control implementation module 512 can implement different values of the magnitude controller 226 according to a time of the day or a day of the week, such as for work or school hours in comparison to personal time. The computing system 100 can determine a significance or an amount of influence for a current time through the context module 526, such as by comparing the current time with the parameter set 308.

Also for example, the control implementation module 512 can implement or withhold the magnitude controller 226 based on situations surrounding or relevant to the user 202. As a more specific example, the control implementation module 512 can implement or withhold the magnitude controller 226 specifically based on the traffic delay surrounding the user 202 and the vehicle 204. The control implementation module 512 can implement reduced instance of the magnitude controller 226 or effectively withhold the magnitude controller 226 based on the calculation of the magnitude calculation module 510 to allow the user 202 to reroute or navigate around the delay.

The control implementation module 512 can implement using the first communication unit 416, the second communication unit 436, the first control unit 412, the second control unit 434, communication unit or control unit of another device, or a combination thereof. As a more specific example, the control implementation module 512 can implement the magnitude controller 226 on the first device 102, the second device 106, or a combination thereof based on accessing the control target 318 with the first communication unit 416, the second communication unit 436, the first control interface 422 of FIG. 4, the second control interface 444 of FIG. 4, or a combination thereof.

Also as a more specific example, the control implementation module 512 can implement the magnitude controller 226 on a structure, such as the vehicle 204 or a building management system, based on interacting or communicating with the structure through the first communication unit 416, the second communication unit 436, the first control interface 422, the second control interface 444, or a combination thereof. The control implementation module 512 can communicate the magnitude controller 226 to structure, interact with the control unit of the structure, directly access or interact with a sub-system or a device within the structure, or a combination thereof.

The control implementation module 512 can implement the magnitude controller 226 as a result or penalty for unwanted behavior of the user 202 according to the control profile 216 or the authorization mechanism 228. The control implementation module 512 can further implement the magnitude controller 226 in exchange for a benefit, such as for vehicle insurance rates or lower energy price. The control implementation module 512 can promote or regulate behavior of the user 202 based on implementing the magnitude controller 226.

It has been discovered that the diminished feature 224 implemented through the magnitude controller 226 and the continuous geofence 218 provides increased user safety and regulatory options. The diminished feature 224 can be useful for recovering or returning to allowed location or behavior. Sudden stops or loss of control based on a boundary can cause danger to the user 202, such as when driving the vehicle 204. The diminished feature 224 instead can allow the user to continue operating the vehicle 204 or the device while recovering or returning to allowed location or behavior to eliminate the danger from sudden stops or losses.

The control implementation module 512 can further implement the active control 332. The control implementation module 512 can implement the active control 332 similar to the magnitude controller 226.

For example, the control implementation module 512 can implement based on the control target 318, the instructions or steps, the target sequence 330, or a combination thereof for the feature profile 316 corresponding to the active control 332.

Also for example, the control implementation module 512 can implement the active control 332 based on the user context 206. Also for example, the control implementation module 512 can use the first communication unit 416, the second communication unit 436, the first control unit 412, the second control unit 434, or a combination thereof to implement the active control 332 on the first device 102, the second device 106, different structure, or a combination thereof.

As a more specific example, the control implementation module 512 can implement the alarm mechanism 334, the communication mechanism 336, the automated maneuver mechanism 338, or a combination thereof for intruder or theft response. The control implementation module 512 can implement based on detecting an intruder, based on the vehicle 204 moving unreasonable distance away from the allowance set 306, or a combination thereof from the current state module 508.

Also as a more specific example, the control implementation module 512 can implement the alarm mechanism 334, the communication mechanism 336, the automated maneuver mechanism 338, or a combination thereof as a negative repercussion for promoting safe or beneficial behavior in minors. The control implementation module 512 can implement based on detecting the minor user not attending class, operating the vehicle 204 without meeting the requirements for the license status 212, such as for permits or unlicensed driver, traveling to unauthorized locations, or a combination thereof.

The control implementation module 512 can further implement the active control 332 along with the diminished feature 224. The control implementation module 512 can implement the diminished feature 224 concurrently with the active control 332. The control implementation module 512 can further implement the active control 332 after or at the end of implementing the diminished feature 224.

For example, the control implementation module 512 can implement the active control 332 along with the diminished feature 224 for approaching emergency vehicles. The control implementation module 512 can implement the diminished feature 224 concurrently with the active control 332 based on the distance between the emergency vehicle and the user 202.

Continuing with the example, the control implementation module 512 can implement the diminished feature 224 concurrently with the active control 332 based on quieting entertainment features or lowering maximum available speed while producing greater alarm notifications in frequency, brightness, or volume as the emergency vehicle approaches the user 202. The control implementation module 512 can implement the automated maneuver mechanism 338 when the emergency vehicle is within a final threshold distance, when the emergency vehicle is routed to pass by the vehicle 204, or a combination thereof.

Also for example, the control implementation module 512 can decrease access to the first device 102, the second device 106, the vehicle 204, or a combination thereof as the user 202 moves away from the allowance set 306. The control implementation module 512 can dim the display, lower the sound volume, remove possible communication targets, disable features or applications, or a combination thereof as the user 202 moves away from the allowance set 306. The control implementation module 512 can implement the active control 332 when the user 202 passes a final threshold distance. The control implementation module 512 can the implement automated maneuver mechanism 338 to stop the vehicle 204 or the first device 102, the communication mechanism 336 to contact or inform the authorization controller 214, the alarm mechanism 334 to notify the people or entities near the user 202, or a combination thereof.

It has been discovered that the active control 332 implemented along with the diminished feature 224 provides increased options for the authorization controller 214. The diminished feature 224 can allow some freedom for operation beyond allowed area or behavior, while the active control 332 can provide a limitation on the allowed freedom. The active control 332 implemented along with the diminished feature 224 can cover more exceptions, scenarios, or possibilities, which can alleviate burden of the authorization controller 214 to account for such exceptions, scenarios, or possibilities.

The control implementation module 512 can control the device for the diminished feature 224 or the active control 332 using the first control unit 412, the second control unit 434, or a combination thereof. The control implementation module 512 can store details of the implementation or a result thereof in the first storage unit 414, the second storage unit 446, or a combination thereof.

After implementation, the control flow can pass from the control implementation module 512 to the control parameter module 502, the current state module 508, or a combination thereof. The control flow can pass similarly as described above between the control parameter module 502 and the characterization module 504, but using processing results of the control implementation module 512, such as details of the implementation or a result thereof.

The control parameter module 502 can use the results of the implementation to update the user profile 208, interact with the authorization controller 214, update the control profile 216, or a combination thereof. The current state module 508 can use the results of the implementation to update the context or location of the user 202.

The computing system 100 can dynamically process the magnitude controller 226. For example, the current state module 508 can pass the user context 206 current for the user 202 to the control generator module 506. The control generator module 506 can dynamically generate the continuous geofence 218 based on the user context 206. The control generator module 506 can generate the continuous geofence 218 as described above in response to receiving or updating the user context 206.

Also for example, the current state module 508 can pass the user context 206 current for the user 202 to the characterization module 504. The current state module 508 can determine or update the variance set 310 as described above based on the user context 206 for degrading the magnitude controller 226 based on locating the first device 102, the user 202, the vehicle 204, or a combination thereof relative to the continuous geofence 218. The control generator module 506 can dynamically generate the continuous geofence 218 based on the dynamically updated instance of the variance set 310.

It has been discovered that the dynamically generated continuous geofence 218 and the continuous function 312 based on the user context 206 provide controls and exceptions relevant and appropriate for context and situations in real-time. The dynamic generation of the continuous geofence 218 and the continuous function 312 can adjust a size, a shape, a distribution, or a combination thereof for the continuous geofence 218 appropriate for the current context or situation of the user 202, the authorization controller 214, or a combination thereof.

The modules described in this application can be hardware implementation or hardware accelerators, including passive circuitry, active circuitry, or both, in the first storage unit 414, the second storage unit 446, the first control unit 412, the second control unit 434, or a combination thereof. The modules can also be hardware implementation or hardware accelerators, including passive circuitry, active circuitry, or both, within the first device 102, the second device 106, or a combination thereof but outside of the first storage unit 414, the second storage unit 446, the first control unit 412, the second control unit 434, or a combination thereof.

The computing system 100 has been described with module functions or order as an example. The computing system 100 can partition the modules differently or order the modules differently. For example, the current state module 508 can be arranged before or parallel to the control parameter module 502. Also for example, the control generator module 506 and the characterization module 504 can be combined.

For illustrative purposes, the various modules have been described as being specific to the first device 102 or the second device 106. However, it is understood that the modules can be distributed differently. For example, the various modules can be implemented in a different device, or the functionalities of the modules can be distributed across multiple devices. Also as an example, the various modules can be stored in a non-transitory memory medium

As a more specific example, one or more modules described above can be stored in the non-transitory memory medium for distribution to a different system, a different device, a different user, or a combination thereof, for manufacturing, or a combination thereof. Also as a more specific example, the modules described above can be implemented or stored using a single hardware unit, such as a chip or a processor, or across multiple hardware units.

The modules described in this application can be stored in the non-transitory computer readable medium. The first storage unit 414, the second storage unit 446, or a combination thereof can represent the non-transitory computer readable medium. The first storage unit 414, the second storage unit 446, or a combination thereof, or a portion therein can be removable from the first device 102, the second device 106, or a combination thereof. Examples of the non-transitory computer readable medium can be a non-volatile memory card or stick, an external hard disk drive, a tape cassette, or an optical disk.

The physical transformation from the diminished feature 224 or the active control 332 results in the movement in the physical world, such as physical change in information communicated for the user on one or more of the devices or physical displacement of the user 202 carrying the first device 102. Movement in the physical world results in updates to the behavior of the user 202, which can be fed back into the computing system 100 as the target location 528 or the user context 206 and further influence or update the continuous geofence 218, the diminished feature 224, the active control 332, or a combination thereof.

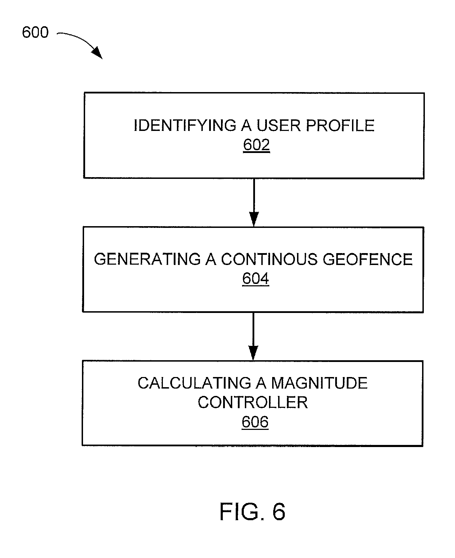

Referring now to FIG. 6, therein is shown a flow chart of a method 600 of operation of a computing system 100 in an embodiment of the present invention. The method 600 includes: identifying a user profile for representing a user accessing a device in a block 602; generating a continuous geofence based on the user profile for continuously controlling the device within the continuous geofence in a block 604; and calculating a magnitude controller based on the continuous geofence for controlling the device in a block 606.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an embodiment of the present invention is that it valuably supports and services the historical trend of reducing costs, simplifying systems, and increasing performance.

These and other valuable aspects of an embodiment of the present invention consequently further the state of the technology to at least the next level.

While the invention has been described in conjunction with a specific best mode, it is to be understood that many alternatives, modifications, and variations will be apparent to those skilled in the art in light of the aforegoing description. Accordingly, it is intended to embrace all such alternatives, modifications, and variations that fall within the scope of the included claims. All matters set forth herein or shown in the accompanying drawings are to be interpreted in an illustrative and non-limiting sense.

## Claims

1. A method of operation of a computing system comprising:
identifying a user profile for representing a user accessing a device;
generating a continuous geofence representing a degree or an intensity associated with a geographic location or area with a control unit, the continuous geofence generated based on the user profile for continuously controlling the device according to the degree or the intensity within the continuous geofence; and
calculating a magnitude controller based on the continuous geofence for controlling the device.

2. The method as claimed in claim 1 wherein generating the continuous geofence includes:
identifying an allowance set for allowing full-feature of the device within the allowance set; and
generating the continuous geofence including a continuous function based on the allowance set for representing the magnitude controller based on locating the device relative to the continuous geofence, wherein:
the allowance set is for describing a reference location or area for the continuous geofence,
the continuous function is for describing a relationship between the magnitude controller and the geographic location or area within the continuous geofence, and
the magnitude controller is for representing a control or a limitation for the degree or the intensity for controlling the device.

3. The method as claimed in claim 1 or 2 wherein:
identifying the user profile includes identifying a control profile for describing a diminished feature according to an authorization controller;
generating the continuous geofence includes:
generating a magnitude profile based on the control profile for describing the magnitude controller based on locating the device relative to the continuous geofence; and
determining a control target based on the control profile for applying the magnitude controller to control the device, wherein:
the diminished feature is for representing an access or a feature of the device available to a user with a restriction or limit according to the continuous geofence,
the magnitude profile is a set of parameters used to calculate the magnitude controller, and
the control target is for representing the device, a portion thereof, or a feature or an attribute thereof for applying or implementing the magnitude controller.

4. The method as claimed in one of the preceding claims further comprising:
determining user context for describing the user accessing the device; and
wherein:
generating the continuous geofence includes dynamically generating the continuous geofence based on the user context.

5. The method as claimed in one of the preceding claims wherein:
identifying the user profile includes identifying a control profile for identifying an authorization controller associated with the active control; further comprising:
determining an active control according to the control profile for proactively controlling the device based on locating the device relative to the continuous geofence.

6. The method as claimed in one of the preceding claims further comprising implementing the magnitude controller to provide a diminished feature for controlling the device.

7. The method as claimed in claim 6 wherein implementing the magnitude controller includes providing the diminished feature according to an authorization mechanism.

8. The method as claimed in claim 6 or 7wherein implementing the magnitude controller includes providing the diminished feature according to an incentive mechanism.

9. The method as claimed in claim 6, 7 or 8 wherein implementing the magnitude controller includes providing the diminished feature according to a guardian control mechanism.

10. The method as claimed in claim 6, 7, 8 or 9 wherein implementing the magnitude controller includes providing the diminished feature according to a legal-restriction mechanism.

11. A computing system comprising:
a storage interface configured to access a user profile for representing a user accessing a device; and
a control unit, coupled to the storage interface, configured to:
generate a continuous geofence based on the user profile for continuously controlling the device within the continuous geofence, and
calculate a magnitude controller based on the continuous geofence for controlling the device.

12. The system as claimed in claim 11 wherein the control unit is configured to:
identify an allowance set for allowing full-feature of the device within the allowance set; and
generate the continuous geofence including a continuous function based on the allowance set for representing the magnitude controller based on locating the device relative to the continuous geofence.

13. The system as claimed in claim 11 or 12 wherein:
the storage interface is configured to access a control profile for describing a diminished feature according to an authorization controller; and
the control unit is configured to:
generate a magnitude profile based on the control profile for describing the magnitude controller based on locating the device relative to the continuous geofence, and
determine a control target based on the control profile for applying the magnitude controller to control the device.

14. The system as claimed in claim 11, 12 or 13 wherein the control unit is configured to:
determine user context for describing the user accessing the device; and
dynamically generate the continuous geofence based on the user context.

15. The system as claimed in claim 11, 12, 13 or 14 wherein the control unit is configured to:
the storage interface is configured to access a control profile for identifying an authorization controller associated with the active control; and
the control unit is configured to determine an active control according to the control profile for proactively controlling the device based on locating the device relative to the continuous geofence.
